# EUROPEAN PATENT SPECIFICATION

(11) **EP 4 656 524 B1**
(45) Date of publication and mention of the grant of the patent: **01.07.2026**
(21) Application number: 24179420.5
(22) Date of filing: 31.05.2024
(51) Int. Cl.: B64D 27/355, B60L 58/00, B60L 58/40, B64U 50/32, B60L 50/75, B64D 27/34, B64D 27/357

(54) **POWER TRAIN WITH A FUEL CELL**
ANTRIEBSSTRANG MIT EINER BRENNSTOFFZELLE
GROUPE MOTOPROPULSEUR AVEC PILE À COMBUSTIBLE

(43) Date of publication of application: 03.12.2025
(73) Proprietor: Vortex Aerotec GmbH, 82234 Weßling (DE)
(72) Inventor: Berthold, Paul, 80799 München (DE)
(74) Representative: Bardehle Pagenberg Partnerschaft mbB Patentanwälte Rechtsanwälte

(56) References cited:
- EP-A1- 4 012 870
- EP-A1- 4 173 956
- GB-A- 2 556 092
- US-A1- 2022 250 755
- US-A1- 2024 158 093

## Description

### 1. Technical field

The present invention relates to a power train for use in a propulsion system, in particular in a propulsion system of a vehicle such as an aerial vehicle. The present invention relates to an efficient operation of fuel cells (and secondary power sources such as batteries) within a power train and, particularly, to a hybrid power sharing architecture. The power train may be used in various applications, including driving multiple loads, such as loads of distributed electric propulsion (DEP) aircrafts and electric vertical take-off and landing (eVTOL) aircrafts. The present invention further relates to a vehicle comprising such power train.

### 2. Technical background

Vehicles, such as cars and aircrafts, are abundantly available and are facing an ever-increasing popularity around the globe. They enable convenient and fast transportation of users (people) and/or goods. Thus, they are of paramount importance in sustaining, and driving forward, globalization, which explains an increasing demand especially also for aviation. Said demand is expected to continually rise in the future.

Vehicles need to be powered to move, e.g., by way of a propulsion system. Conventional propulsion systems burn fossil fuels to drive engines that provide a propulsive force. That said, rather recently, there has been a paradigm shift towards more efficient and (environmentally) sustainable drive systems, resulting in increasing use of batteries, fuel cells, or the like in propulsion systems.

Systems comprising fuel cells show superior mass-specific energy densities compared to lithium-ion batteries but suffer from limited power densities. Common hybrid power trains address this by combining a (or multiple) fuel cell and a (or multiple) secondary power source. Such secondary power source can be a battery, (super)-capacitor, or the like. The secondary power source takes on a share of the overall load, such that high power demands can be redistributed between the fuel cell and the secondary power source when needed, allowing the specific design of components for average power requirement, not for peak demand. This can lead to reduced component requirements, cost, and weight savings for applications that require more power for limited amounts of time only. For example, such applications can be found in aircrafts, such as eVTOL aircrafts, where significantly more power is required during the short take-off or landing phases as compared to energy-efficient cruise flight. Further benefits of common hybrid systems are that the secondary power source and fuel cell are usually electrically connected in parallel. This provides redundancy, especially since fuel cells are often cycling for short time periods during operation. Hence, the entire load can be supplied from the secondary power source without loss of power or the need for a distinct cycling backup source.

Existing hybrid power trains that feature a fuel cell can be generally divided into passive and active power trains:
While passive systems can allow for load smoothing, regenerative braking, and increased short-term peak power compared to pure fuel-cell systems, there are no means to steer or control the respective components' power share. The partial loads are distributed following specific characteristics of the components (e.g., voltage U to current I characteristics). Hence, the system needs to be carefully designed to achieve a suitable U-I characteristic for the desired operational requirements. As power sharing is a dynamic process that depends on a multitude of variables (e.g., the current power demand, the power train's nominal voltage, the load behavior, or the like) this often requires excessive sizing of the components. Hence, this comes with cost and weight penalties.

Active systems solve these restrictions and maintain the same benefits by regulating the power share of the individual components. This may involve feeding power back from the fuel cell into the secondary power source, i.e., recharging the secondary power source when excess power is available. Active systems, however, require additional electric power converters, typically heavy DC-DC converters (DC denoting, as usual, direct current). Furthermore, complicated controllers or control schemes are necessary to achieve the desired power contributions/distributions.

Known active systems and their relevance for eVTOL aircrafts are discussed, e.g., in a paper entitled "Hydrogen Fuel Cell and Battery Hybrid Architecture for Range Extension of Electric VTOL (eVTOL) Aircraft" authored by Wanyi Ng, Mrinalgouda Patil, Anubhav Datta in the Journal of the American Helicopter Society. The proposed active system requires three DC-DC converters to achieve optimal component utilization. The active power share control is enforced by regulating the different source voltages through two DC-DC converters. In doing so, the effective U-I characteristic observed by the load is altered. A third DC-DC converter is used for recharging the secondary power source (usually batteries) from excess power from the fuel cell.

GB 2256092 A discloses a power system for an aircraft comprising a first fuel cell configured to provide base power to one or more loads on the aircraft. The power system further includes a second fuel cell configured to provide peak power to the one or more loads on the aircraft.

DE 102 58 204 A1 describes an active hybrid powertrain for automotive applications with active power share control. The proposed active system employs a fuel cell, battery, converter, central processor, as well as a power and battery management system. Active power share is controlled via a bidirectional DC-DC converter in the direct power path of the battery to a motor. The DC-DC converter has to match respective voltages of the system by adjusting the outgoing current. GB 2 549 181 A describes an active system with a fuel cell and multiple secondary sources such as a battery and a capacitor, a converter, and a power management system. A power-sharing control algorithm is described with applications in unmanned aerial vehicles (UAVs). A converter is arranged in the direct power path of the fuel cell and utilized for power share control. US 2024/0158093 A1 discloses a hybrid power distribution system for an aircraft that includes a first and second set of electrically-powered devices, such as inverters, motors and so forth. A first battery system is coupled to one or more of the first set of electrically-powered devices and a first fuel cell is coupled to one or more of the first set of electrically-powered devices. A second battery system is coupled to one or more of the second set of electrically-powered devices and a second fuel cell coupled to one or more of the second set of electrically-powered devices. The fuel cells and batteries together supply power to the electrically-powered devices as needed, while the fuel cells also keep the batteries charged.

US 2022/0250755 A1 discloses a configurable electrical architecture for an eVTOL aircraft having a takeoff and landing power mode and a cruise power mode. The configurable electrical architecture includes a power-optimized power source including a high-power battery array and an energy-optimized power source selected from a plurality of interchangeable energy-optimized power sources including a high-energy battery array, a hydrogen fuel cell system and a turbo-generator system. A distribution system is electrically coupled to the power-optimized power source and the energy-optimized power source. At least one electric motor is electrically coupled to the distribution system. In the takeoff and landing power mode, both the power-optimized power source and the energy-optimized power source provide electrical power to the at least one electric motor. In the cruise power mode, the energy-optimized power source provides electrical power to the at least one electric motor and to the power-optimized power source to recharge the high-power battery array.

EP 4 012 870 A1 discloses systems and methods for a power control system for a vehicle having multiple power sources. The power control system may include a plurality of sensors associated with one or more power sources and a microcontroller configured to receive a plurality of signal inputs, wherein the microcontroller selects a power state for the power control system based at least in part on the plurality of signal inputs from the plurality of sensors. The power state may be selected from a group including a first power state, wherein power is provided to a critical power subsystem, an essential power subsystem, and an auxiliary power subsystem, a second power state, wherein power is provided to the critical power subsystem and the essential power subsystem of the vehicle, and a third power state, wherein power is provided only to the critical power subsystem of the vehicle.

EP 4 173 956 A1 discloses a hybrid propulsion system for propelling an aircraft that comprises a first propulsion system based on fuel cells and a second propulsion system based on one or more combustion engines. The first propulsion system is fully providing a base thrust. The second propulsion system is providing a peak thrust needed for take-off of the aircraft and/or is assisting the first propulsion system in propelling the aircraft when the peak thrust is needed or in failure conditions.

As already outlined in more general terms above, these known active systems have various disadvantages. For instance, they each rely on a single power bus, e.g., they feature one power bus which powers the single load that is the propulsion system as a whole. Moreover, the known active systems require heavy converters arranged in the direct power paths. This mitigates the advantages these converters are meant to bring about, rendering the overall system less efficient:
The (heavy) converters required in the prior art need to be arranged between the fuel cell and the load or between the secondary power source and the load or a combination thereof. However, these converters introduce additional conversion losses and can require complex control schemes. While conversion losses reduce the system's efficiency and power output, they also necessitate heavy heat exchangers to dissipate - potentially significant - power losses. Furthermore, the additional weight, cost, and system complexity can be tremendous, especially when the converters are sized to handle peak power of the fuel cell or secondary source.

Moreover, as the converters cannot be bypassed, they need to operate continuously and therefore represent an additional weak point in the system architecture. While applicable to all applications of power trains for use in a propulsion system, this disadvantage is even more pronounced in vehicles such as aircrafts, as it may in turn require redundancy measures (if admissible at all).

Against this background, an object of the present invention is to provide a power train that addresses one or more or all of the above-mentioned drawbacks and that improves the deficiencies of the known systems.

### 3. Summary of the invention

The above-mentioned object and further objects, which become apparent from the following description, are solved by the subject matter of the independent claim.

Preferred embodiments are subject of the dependent claims, and the skilled person finds hints for other suitable embodiments of the present invention throughout the disclosure of the present application.

A first aspect of the invention is directed to a power train, in particular for use in a propulsion system of a vehicle such as an aerial vehicle. The power train comprises a first power sub-system comprising: a first load of the propulsion system and a fuel cell configured to power the first load. The power train further comprises a second power sub-system comprising: a second load of the propulsion system and a secondary power source configured to power the second load.

Thereby, an improved power train is provided. In particular, the power train can improve for instance powering of a propulsion system by dividing the total load which the propulsion system represents into multiple (smaller) loads. This is achieved by providing a first power sub-system and a separate, second power sub-system, each power sub-system comprising, and powering, a different load (e.g., portion and/or component) of the propulsion system. The present invention obviates the need for at least some of the converters as per the prior art, which are required there to ensure voltage matching and delivery of peak power between the power sources and the load, which are usually connected together via a single electrical bus. The converters of the prior art are commonly oversized and heavy, as peak power may only prevail for a short amount of time.

The power train proposed here thus allows to reduce weight and complexity. In addition, safety and/or reliability can be increased as a limited number of parts/components is provided (e.g., no converters of the prior art) that may need to be operated. Further, conversion losses can be mitigated and/or eliminated. Thereby, the power train allows for the synergistic effect of improved power source utilization and more efficient coupling of the sources and the loads.

By providing a first load in the first power sub-system and a (separate) second load in the second power sub-system, matching of the power sources and the respective loads according to their desired utilization can be optimized. This may therefore result in an overall improved power characteristic whilst the power train can be optimized to achieve a minimum weight. Further, design freedom can be increased by way of the power train proposed here without the expense of heavy converters.

It is to note that the second load may be distinct and separate from the first load. As a non-limiting example, the first and second loads may be each be a separate engine or motor or the like. Hence, while the loads may add to substantially 100% of the total load that the propulsion system represents, they may not just be (artificially) split loads/mere portions of the propulsion system. Instead, the first and second loads may be physically separate(d) loads.

The fuel cell being "configured to" power the first load may refer to the physical prerequisites for powering. Nonetheless, this may not necessarily require power to actually flow, although this is not precluded according to the present disclosure.

While a first power sub-system and a second power sub-system are described herein, the power train may comprise more than two power sub-systems. This may allow to split the total load that the propulsion system represents into further (a larger number of) separate loads. As understood, also more than a first and a second load may be provided. The respective loads provided in the respective sub-systems may add up to the total load of the propulsion system (i.e., substantially 100% of the total load). Similarly, the power train may comprise a plurality of fuel cells and/or power sources as described elsewhere herein.

The power train as proposed in here may be used in any systems and is not limited to propulsion systems. For instance, any system that involves transfer of power may employ the power train. As an example, the power train may be useful for powering of gardening utilities, portable power stations, uninterruptible power supplies, auxiliary / emergency / backup power systems, such systems being on-site systems and/or distributed generation systems.

As regards the particular use of the power train in a propulsion system, a variety of specific propulsion systems are encompassed, including but not limited to the following non-exhaustive list of examples: propulsion systems of automobiles, motorcycles, heavy machinery, agricultural equipment, railroad locomotives, marine vessels, jets, rockets, steam powered systems, diesel powered systems, turboprop powered systems, turboshaft powered systems, solar-powered systems, nuclear powered systems, wind propulsion, systems involving magnetic levitation, and partially human-powered systems. The applications may also expand to stationary power systems, for instance generators, industrial machinery, wind turbines, hydroelectric power plants, steam and gas turbines, industrial engines, and pumps and compressors.

The vehicles may inter alia comprise UAVs (Unmanned Aerial Vehicles), VTOL (Vertical Takeoff and Landing) aircrafts, short take-off and landing (STOL) aircrafts, commercial airliners, general aviation aircraft, military planes, cargo aircraft, helicopters, business jets, regional jets, amphibious planes, trainer aircraft, experimental aircrafts, private use aircrafts, defense aircrafts, cargo hauling aircrafts, aircrafts for rescue operations, corporate travel aircrafts, regional connectivity aircrafts, amphibious landings aircrafts, pilot training aircrafts, and aircrafts for research purposes.

It is understood that the described advantages may also apply for the following preferred embodiments. One or more of the features described with reference to the following preferred embodiments may be combined with one another as far as this is technically meaningful as understood by the skilled person.

The first power sub-system comprises a first bus connecting the fuel cell to the first load, and the second power sub-system comprises a second bus, separate from the first bus, connecting the secondary power source to the second load.

That is, separate busses are provided, each bus ensuring powering of one distinct load. As understood, the first bus and/or the second bus may be electrical busses. The loads of the power sub-systems can thereby be matched (e.g., by matching the voltage (U) / current (I) characteristics) according to an optimum desired use scenario of each power sub-system. For instance, one may match the loads such that the weight of the power train can be reduced.

It is to note that the first load may comprise one or more first sub-loads and/or that the second load may comprise one or more second sub-loads. They may sum up to about 100% of the total load as described elsewhere herein in greater detail. In one example the one or more first sub-loads may be lumped so as to form the first load. In one example the one or more second sub-loads may be lumped so as to form the second load.

**In** a further embodiment of the power train according to the first aspect, the fuel cell is configured to power the first load directly; and/or the secondary power source is configured to power the second load directly.

To power the first load and/or the second load directly may mean that voltage levels are substantially matched between the fuel cell and the first load and/or between the secondary power source and the second load. Thereby the need for heavy converters in the direct power path (i.e., the direct electrical path between the fuel cell and the first load and/or between the secondary power source and the second load) may essentially be obviated. This reduces weight and complexity.

As described elsewhere herein in greater detail, the present disclosure, and in particular the requirement of directly powering a load, may not preclude any and all converters in the respective direct power path. There may still be converters in the direct power path. However, such converters do not function like the (heavy) converters used in known systems and are therefore structurally and functionally different from these.

Directly powering a load from the fuel cell can minimize energy conversion steps and associated losses. Fuel cells, for example, convert chemical energy into electrical energy more efficiently for certain applications, and by powering the first load directly, the power train can operate more efficiently.

The ability to power different loads directly from different power sources provides flexibility. This may allow for more straightforward system architecture, or for the design to be tailored to specific application requirements.

Different loads may require different qualities of power (e.g., (constant) voltage, (constant) current, ripple voltage, noise content, output impedance, purity of waveform). Further, the transient behaviour of a source may be important, in particular for loads that may change quickly. Powering loads directly from the source best suited to those requirements can enhance the overall performance and longevity of the devices, parts, and/or elements comprised by those loads.

**In** a further embodiment of the power train according to the first aspect, the fuel cell is further configured to power the second load; and/or the secondary power source is further configured to power the first load.

This has the advantage that power may be applied across power sub-systems. For instance, this can provide a redundancy measure or fail-safe mechanism in case a fuel cell and/or any other power source fails or is overloaded. **In** case the first load requires more power than the fuel cell can provide at the moment, the secondary power source may provide power thereto. Conversely, in case the second load requires more power than the secondary power source can provide at the moment, the fuel cell may provide power thereto.

During a reversal of the power flow between a load and a power source (a fuel cell and/or a secondary power source such as a battery), such as during regenerative braking, other loads and or sources can be coupled to redirect the power flow for storage or direct powering. Hence, the power train may gain in redundancy and flexibility. Thereby, it is more robust concerning partial power sub-system(s) and/or component failures.

The fuel cell is configured not to power the first load and the second load simultaneously while the secondary power source powers both the second load and the first load; and/or the secondary power source is configured not to power the second load and the first load simultaneously while the fuel cell powers both the first load and the second load.

This ensures that not all loads are powered simultaneously by all power sources (e.g., the fuel cell and the secondary power source), in turn providing efficiency gains. A dedicated control implementation may be provided that ensures this functionality.

In a further embodiment of the power train according to the first aspect, the system further comprises an electrical component configured to exchange power between the first power sub-system and the second power sub-system.

This allows the power train to shift power from one sub-system to another and/or vice versa. This shifting could be done based on demand. For example, if the first power sub-system is generating more power by the fuel cell than is needed for (directly) powering the first load, the excess power can be routed to the second power sub-system to (additionally) power the second load and/or to charge the secondary power source (e.g., a battery or supercapacitor).

As an example, the electrical component may include a converter and/or a switch device. A switch device may be for instance a mechanical switch, relays, a semiconductor device like a transistor, a reed switch, or the like. For instance, a converter may allow to provide power to (e.g., recharge) the secondary power source during low power demand. In case of an aerial vehicle, this may be cruise flight or the like.

The switch device also beneficially allows to exchange power, for instance in case of a failure of one of the power sources (the fuel cell or the secondary power source) or the like.

In a further embodiment of the power train according to the first aspect, the first power sub-system comprises one or more converters arranged between the fuel cell and the first load; and/or the second power sub-system comprises one or more converters arranged between the secondary power source and the second load.

The converters referred to here may include electronic speed controllers (ESC) or inverters for driving a motor. This may ensure that the supplied direct current (DC) is applied to an engine or a motor in a controlled manner. These converters have the function to operate and/or control the load, e.g., the engine or the motor. This operation and/or control may include generating 3-phase-AC or applying Pulse-Width Modulation (PWM)-modulation or the like.

These converters referred to here may be different than converters used in known systems, which have the function to specifically improve coupling between a power source and a load. The converters used in known systems have the function to adjust voltage/current/power levels, thereby performing impedance matching, or the like. For instance, converters in the prior art may be DC-DC switch mode converters, which may not be employed in here.

By contrast, the converters referred to in this embodiment may not be able to perform the function of the converters used in known systems. As such, they are structurally different and as such (still) provide for reduced weight and complexity as compared to the state of the art.

In a further embodiment of the power train according to the first aspect, the system further comprises a power management system, PMS, for controlling the electrical component and/or the one or more converters (as just described). Such control may preferably be based on one or more of the following control information: a total power demand of the propulsion system, a power demand of the first load, a power demand of the second load, a charging state of the secondary power source, a fuel state of the fuel cell, a pressure of the fuel cell, a temperature of the fuel cell, a temperature of the secondary power source, a temperature of the electrical component, a temperature of one or more converters, a current, in particular a discharge current, a voltage.

The PMS allows to (re-)couple power sub-systems and/or to control the optional converters. This may provide for optimal power source utilization. This, in turn, increases the power train's performance and efficiency. For instance, individual power sub-systems may be (re-)coupled and/or individual converters may be controlled to steer the power flow in a beneficial manner.

The control information further contributes to an enhanced power train. For instance, the currents and/or voltage drops of components in the power train may allow to assess the actual operation of the power train. This may be performed online, e.g., in real-time. Further, additional information can be obtained by processing the control information, e.g., by applying calculation algorithms, from which one can evaluate the power consumption of a component.

Voltages allow to check the state of the power train, e.g., it could be analysed whether the fuel cell is operating in a predicted and/or intended manner. Moreover, predictions of the future may be made based on the information, e.g., concerning how much charge may be left in the power source(s). Currents may be used to evaluate future states, e.g., it could be determined whether a given charging current will empty and/or load a power source in a given time period. Accordingly, this may allow to take measures in order to improve operation of the power train.

In a further embodiment of the power train according to the first aspect, the system further comprises one or more sensors for acquiring at least a portion of the control information discussed above.

The one or more sensors allow acquisition of the control information in a more reliable and robust way. They may be arranged so as to allow retrieving an overall picture of the power train's state. Sharing the information retrieved by the one or more sensors with the PMS improves overall power management.

In a further embodiment of the power train according to the first aspect, the PMS is configured to temporarily disconnect the fuel cell and/or the secondary power source from the first load and/or the second load.

This allows performance and efficiency of the power train to be increased. For instance, one or more loads may be powered in one or more operating conditions solely from the fuel cell (or from more than one fuel cell in case the power train comprises more than one fuel cell, e.g., another fuel cell in another power sub-system).

Temporarily disconnecting the fuel cell and/or the secondary power source from the first load and/or the second load may also have safety advantages, e.g., in case of a failure of one or more power source(s).

As used herein, disconnecting a power source from a load may refer to stopping the power supply from the power source to the load, however without altering their physical connection, i.e., the power source may stay "configured to" power the load. Hence, it is also to be understood that a source, e.g., the secondary power source, disconnected from its load may still be recharged by, e.g., the fuel cell.

However, in some embodiments, disconnecting a power source from a load may refer to physically decoupling the power source from the load.

In a further embodiment of the power train according to the first aspect, the first power sub-system and/or the second power sub-system comprises one or more back-up power sources.

This allows a substantially continuous delivery of power to the respective distinct loads. This may be appreciated in case one or more power sub-systems undergo cycling (e.g., repeatedly starting up and/or shutting down and/or varying their output in response to changes in electrical demand).

In a further embodiment of the power train according to the first aspect, the fuel cell is configured to power and/or recharge the secondary power source.

This further improves the power train as explained elsewhere herein. Specifically, the secondary power source may be recharged during low power demand of the first load. Excess power may then be rerouted from the fuel cell to the secondary power source.

In a further embodiment of the power train according to the first aspect, the system further comprises a secondary power source management system for controlling powering and status of the secondary power source, in particular for controlling a powering of the secondary power source by the fuel cell.

The secondary power source management system may provide additional safety for the power train. For instance, in case the secondary power source comprises a battery, a safe use of the battery within the power train may be ensured. This may enable lifetime-tracking of the same. In such cases, the secondary power source may then be referred to as a battery management system (BMS).

Controlled re- and/or discharging of one or more secondary power sources enables the power train to operate through different states in a highly sophisticated manner. Different states may include for instance: a high power demand, in which the batteries can act as secondary power sources for the first load, and a low power demand, in which excess power from the fuel cell can be utilized to recharge the secondary power source of the second power sub-system.

As understood, in case the power train comprises more than two power sub-systems, the secondary power source management system may be configured to manage substantially all secondary power sources that are encompassed in the multiple power-sub-systems.

In a further embodiment of the power train according to the first aspect, the first load comprises one or more first engines of a propulsion system of an aerial vehicle, the one or more first engines configured to provide for a first movement, in particular a cruise movement of the aerial vehicle, and/or the second load comprises one or more second engines of the propulsion system of the aerial vehicle, the one or more second engines configured to provide for a second movement, in particular a hover movement of the aerial vehicle.

This defines a particularly useful application of the power train according to the present invention.

The movements may generally include movements made during flight phases such as takeoff, climb, cruise, descent, landing, approach, loiter, or the like. Movements may be composed of one or more or any combinations including one or more combined elements of: pitching, rolling, yawing, surging, swaying, heaving.

Generally, the first movement and the second movement may be different. For example, the one or more first engines may be configured to provide (exclusively) for a cruise movement of the aerial vehicle, whereas the one or more second engines may be configured to provide (exclusively) for a hover movement of the aerial vehicle.

However, in different embodiments, the first movement and the second movement may overlap. For example, the one or more first engines may be configured to selectively provide for a cruise movement or a hover movement of the aerial vehicle, e.g., where the one or more first engines comprises a tilt-rotor or tilt-propeller., i.e., a rotor or propeller that can be tilted for hover and cruise flight.

In a further embodiment of the power train according to the first aspect, a flight controller of a vehicle is provided, which interacts with the power train, wherein information of the flight controller may be communicated to the PMS, and/or information of the PMS may be communicated to the flight controller.

A second aspect of the invention is directed to a vehicle, in particular an aerial vehicle, comprising a power train according to the preceding aspect.

Similar features and advantages as set forth above with respect to the power train of the first aspect also apply to the vehicle comprising such a power train. Thus, the mentioned features, advantages and effects are applicable mutatis mutandis to the vehicle of the second aspect.

The designation of the first and second "aspect" is not limiting but meant to simplify reading of the present disclosure.

### 4. Brief description of the figures

In the following, preferred embodiments are described, by way of example only.

Reference is made to the following accompanying figures:
- Fig. 1: illustrates an exemplary power train according to an embodiment of the present disclosure;
- Fig. 2: illustrates an exemplary power train according to a further embodiment of the present disclosure;
- Fig. 3: illustrates an exemplary power train according to yet a further embodiment of the present disclosure.

### 5. Detailed description of the figures

In the following, the invention is described with reference to the accompanying figures in more detail. However, the present invention can also be used in any other embodiment not explicitly disclosed hereafter, when falling within the scope of the claims.

While specific feature combinations are described in the following with respect to exemplary embodiments of the present invention, it is to be understood that not all features of the discussed embodiments have to be present for realizing the invention, which is defined by the subject matter of the claims.

The disclosed embodiments may be modified by combining certain features of one embodiment with one or more features of another embodiment. Specifically, the skilled person will understand that features, components and/or functional elements of one embodiment can be combined with technically compatible features, components and/or functional elements of any other embodiment of the present invention given that the resulting combination falls within the definition of the invention provided by the claims. The skilled person also understands that certain features may be omitted in so far as they appear dispensable.

Throughout the present figures and specification, the same reference numerals refer to the same elements. The figures may not be to scale, and the relative size, proportions, and depiction of elements in the figures may be exaggerated for clarity, illustration, and convenience.

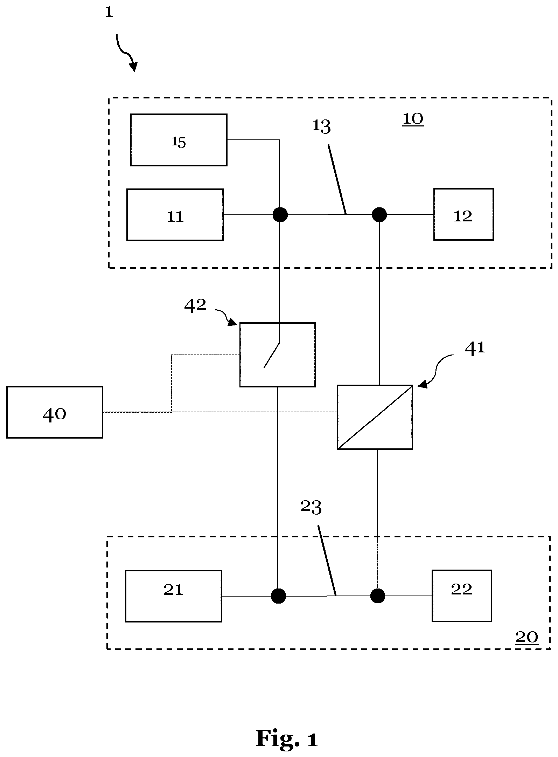

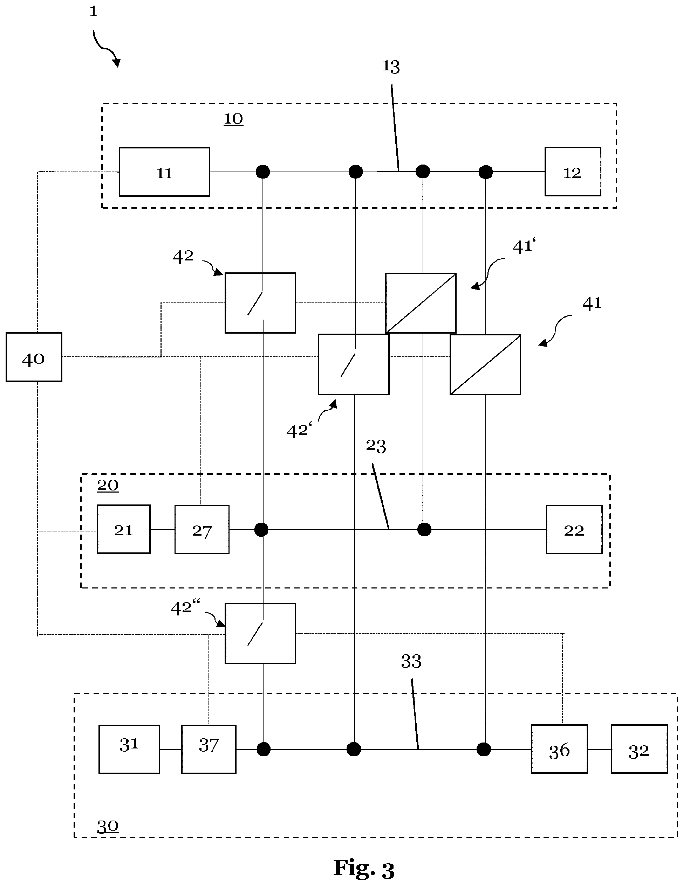

**Fig. 1** shows a power train 1, in particular for use in a propulsion system of a vehicle such as an aerial vehicle. The power train 1 comprises two power sub-systems 10, 20. As described elsewhere herein, the power train 1 is not limited to two power sub-systems 10, 20 and a plurality of power sub-systems are encompassed (cf. also the embodiment of Fig. 3 described in more detail below).

The first power sub-system 10 comprises a fuel cell 11, which delivers power to a first load 12. The first load 12 is also comprised by the first power sub-system 10. The first load 12 may be favorably paired to the fuel cell 11.

The second power sub-system 20 comprises a secondary power source 21 and a second load 22. The second load 22 is distinct from the first load 21. For example, the first load 21 and the second load 22 may be different, separate engines of a propulsion system. This may be referred to in here as a split design of the total load demand of the propulsion system. The second load 22 may be favorably paired to the secondary power source 21.

A favorable pairing of loads 12, 22 and respective sources 11, 21 could be achieved for instance by supplying a low-power long-term load 12 (such as one or more engines configured to provide a cruise movement of an aerial vehicle) from the fuel cell 11 of the first power sub-system 10 and relying on the secondary power source 21 of the second power sub-system 20 for a high-power short-term load 22 (such as one or more engines configured to provide a hover or vertical take-off/landing movement of an aerial vehicle). An electrical component 41 (described in greater detail below) may be provided, which may be used to (re-)charge the second power sub-system 20 from the fuel cell 11 during low power demand. The electrical component 41 may be implemented by a converter. Other implementations are encompassed as well.

The first power sub-system 10 comprises a first bus 13 connecting the fuel cell 11 to the first load 12. The second power sub-system 20 comprises a second bus 23, separate from the first bus 13, connecting the secondary power source 21 to the second load 22.

The fuel cell 11 may be configured to power the first load 12 directly. Additionally or alternatively, the secondary power source 21 may be configured to power the second load 22 directly.

The power train 1 may comprise a further electrical component 42, which may be implemented by means of a coupling switch device. The electrical component 42 may allow for an additional redundancy measure of the power train 1, in particular in addition to an electrical component 41 comprising a converter. Further, the electrical component 42 may provide a path for utilizing reverse power flow to the first power sub-system 10, specifically to the fuel cell 11 thereof. In this manner, the fuel cell 11 may be further configured to power the second load 22. Additionally or alternatively, the secondary power source 21 may be further configured to power the first load 12.

The coupling switch device may have the benefit of a high power than may be transmitted whilst losses are low. Further, it is a relatively simple and less complex component. Thereby, it is reliable.

The converter may have the benefit that it can give control over the type and amount of power redistributed. For instance, the voltage might be adjusted to a suitable level and the power limited when coupled. It allows for greater flexibility of the design. Furthermore, the converter may perform a typical charging routine which may comprise supplying a constant charge current and, subsequently and close to the full state of charge, switch to constant voltage charging (CC-CV charging).

Employing both, i.e., the coupling switch device and the converter improve in general redundancy. E.g., the coupling switch device may be used as a backup option and the small and lightweight converter may be used for charging.

The electrical components 41, 42 may be configured to exchange power between the first power sub-system 10 and the second power sub-system 20.

The power train 1 may further comprise a power management system 40, PMS, for controlling the electrical components 41, 42. Moreover, in case further converters or the like are comprised by the power train 1, the PMS may also control these further converters or the like.

Controlling may be based on one or more of the following control information: a total power demand of the propulsion system, a power demand of the first load 12, a power demand of the second load 22, a charging state of the secondary power source 21, a fuel state of the fuel cell 11, a pressure of the fuel cell 11, a temperature of the fuel cell 11, a temperature of the secondary power source 21, a temperature of one or more of the electrical components 41, 42, a temperature of one or more converters, a current, in particular a discharge current, a voltage (e.g., across electrical components 41, 42, or other components, specifically indicated as converters or the like).

As can be gathered from Fig. 1, the first power sub-system 10 may comprise one or more back-up power sources 15 (only one is indicated in Fig. 1). This may allow to continuously maintain power during cycling of, e.g., the fuel cell 11. Additionally or alternatively, the second power sub-system 20 may comprise one or more back-up power sources (not shown in the figures).

Moreover, information may be shared between the PMS 40, fuel cell 11, secondary source(s) 21, and converter(s).

The PMS 40 may be configured to temporarily disconnect the fuel cell 11 and/or the secondary power source 21 from the first load 12 and/or the second load 22, i.e., it may stop power supply from the fuel cell 11 and/or the secondary power source 21 to any of the loads.

The fuel cell 11 is configured not to power the first load 12 and the second load 22 simultaneously while the secondary power source 21 powers both the second load 22 and the first load 12. Additionally or alternatively, the secondary power source 21 is configured not to power the second load 22 and the first load 12 simultaneously while the fuel cell 11 powers both the first load 12 and the second load 22.

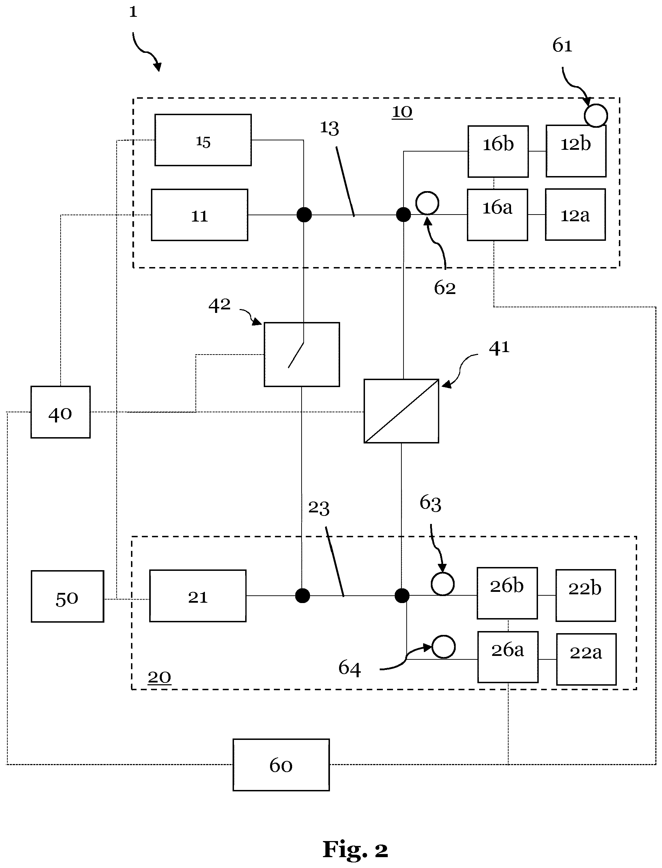

**Fig 2** shows a power train 1 according to a further embodiment. This embodiment may be favorably employed as a power train 1 for a propulsion system of a DEP or an eVTOL aircraft. Distinct loads 12a, 12b (as described below) of the propulsion system are provided in a first power sub-system 10. Further, distinct loads 22a, 22b (as described below) of the propulsion system are provided in a second power sub-system 20. Hence, the total load that is the propulsion system is split into a number of separate, distinct (smaller) loads, and these distinct loads are distributed across the two power sub-systems 10, 20. Said distribution is done in a favorable manner so as to maximize performance and efficiency, as well as to minimize weight, and/or the like. This may be referred to as a split design as described elsewhere herein. As described with reference to Fig. 1, a first bus 13 and a second bus 23 are provided.

A motor controller may be provided, which may perform a similar function as converters. The motor controller may be implemented as electronic speed controller (ESC) 16a, 16b in the first power sub-system 10 and/or as ESC 26a, 26b in the second power sub-system 20. It is noted that these motor controllers 16a, 16b, 26a, 26b do not function as prior art converters as explained elsewhere herein. Hence, the motor controllers 16a, 16b, 26a, 26b do not contradict the present invention's aim of reducing weight.

In the example of Fig. 2, a first first sub-load 12a may be a cruise motor and a second first sub-load 12b may be a lift motor. These motors may be powered from the fuel cell 11. This may enhance fuel cell 11 utilization. Load 12a and load 12b may be lumped to form the first load 12 (not indicated in the figure but understood as the combination of 12a and 12b).

Further, a first second sub-load 22a may be a lift motor and second second sub-load 22b may be a lift motor as well. These motors may be powered by the second power source 21, which may be implemented by means of a battery-based secondary power source 21. Load 22a and load 22b may be lumped to form the second load 22 (not indicated in the figure but understood as the combination of 22a and 22b).

During a high power demand (e.g., during lift, vertical take-off/landing, or other power demanding flight conditions) both sub-systems 10, 20 may operate independently, leading to an optimal power utilization and/or power share. An electronic component 41, e.g., a converter 41, may facilitate supply of power to the secondary power source 21 during low power demand (e.g., cruise flight condition), e.g., for recharging. Furthermore, the two power sub-systems 10, 20 can be recoupled via another electronic component 42, e.g., a switch device 42, to maintain power during a source failure, reverse power flow, and/or overload of power sub-systems 10 and/or 20. In such a scenario, a normal operation may not be maintained, and the power sub-systems 10 and/or 20 may face excessive power demands. A practical example without limitation may be one or two engines of the aerial vehicle being out of operation.

As described elsewhere herein, the PMS 40 in Fig. 2 can control the switch device 42 and/or the converter 41.

The power train 1 may further comprise a secondary power source management system 50 for controlling powering and/or status of the secondary power source 21, in particular for controlling a powering (e.g., charging or recharging) of the secondary power source 21 by the fuel cell 11.

The secondary power source management system 50 may be termed a battery power management system (BMS) where the secondary power source 21 comprises one or more batteries. The secondary power source management system 50 may be used to control and track the state of charge, lifetime, and discharge/charging process of the secondary power source 21 and back-up power source 15, which may be used as cycling sources.

The power train 1 may comprise one or more sensors 61, 62, 63, 64 for acquiring at least a portion of the control information (described in more detail with respect to Fig. 1).

The gathered control information may be shared between the components of the power train 1, especially with the PMS 40. Measurement data from sensors 63, 64 may be specifically acquired in order to allow insights into the lightweight converters 26a, 26b. This data can be fed to the PMS 40 to improve state estimation, fault detection, control, and/or power management.

The PMS 40 can react to faults and/or unfavourable operating conditions by adapting the components. E.g., setpoints of converters may be adapted, operation of coupling switches may be adapted, and/or valuable feedback to the user/operator may be provided, which can enhance safety and reliability. In general, acquisition of such information by way of the one or more sensors 61, 62, 63, 64 where needed can improve the power train 1.

A flight controller 60 of the vehicle may be provided, which interacts with the power train 1. The flight controller 60 may adapt its output to the PMS 40 feedback such as power reserves, while also providing further information to the PMS 40, such as power requirements. Additionally or alternatively, the flight controller 60 may be able to change a trajectory of the vehicle, e.g., based on information retrieved from the PMS 40.

In an illustrative example, the flight controller 60 may communicate upcoming high power demands beforehand and the PMS 40 may react to said communication. The PMS 40 may ensure that sufficient resources are provided in time. This may comprise accelerating the recharging process. This may or may not comprise going beyond a most efficient charging rate.

Further, in an illustrative example, additionally or alternatively the PMS 40 may communicate to the flight controller 60 that there is little power margin left, e.g., for efficient operation. The flight controller 60 may then react to that by reducing speed or flying less pronounced maneuvers.

Both illustrative examples are advantageous for the power train **1.****Fig. 3** shows a power train 1 according to yet a further embodiment. The power train 1 comprises three power sub-systems 10, 20, 30. The first power sub-system 10 comprises a fuel cell 11 and a first load 12. The second 20 and third 30 power sub-systems each comprise (further) secondary power sources 21, 31 and distinct second and third loads 22, 32. Electrical components, e.g., implemented by means of converters 41, 41' are arranged between the power sub-systems 10, 20, 30 and may be used to redistribute power in a controlled manner as described elsewhere herein. As described with reference to Fig. 1, the first power sub-system 10 comprises a first bus 13 connecting the fuel cell 11 to the first load 12. The second power sub-system 20 comprises a second bus 23, separate from the first bus 13, connecting the secondary power source 21 to the second load 22. The third power sub-system 30 may comprise a third bus 33, separate from the first bus 13 and the second bus 23, connecting the second secondary power source 31 to the second load 32.

The three power sub-systems 10, 20, 30 can be arbitrarily coupled through electrical components 42, 42', 42", which may be implemented by means of coupling devices 42, 42', 42". A PMS 40 is provided as described elsewhere herein.

The third power sub-system 30 comprises a converter 36 in the direct power path. However, converter 36 (like motor controllers 16a, 16b, 26a, 26b) is structurally and functionally different to prior art converters, e.g., it is lightweight. The converter 36 may provide for a regulated voltage level of the third load 32. By contrast, prior art converters have the function to specifically improve the coupling between a power source and a load. This is not mandatory here.

The second and third power sub-systems 20, 30 comprise a source coupling switch device 27, 37 which can be used to implement sole fuel cell 11 operation (i.e., all loads being powered exclusively from the fuel cell 11). It is also feasible to arrange converters and/or switch devices conveniently to even supply power to decoupled sources (not shown).

The switch devices 27, 37 and converters 36 may be controlled through the PMS 40. The PMS 40 may function based on the feedback from the fuel cell 11, converters, switch devices, and/or loads.

It is to note that the scope of protection is determined by the claims and is not limited by the embodiments disclosed in the figures and discussed above.

It will be apparent to those skilled in the art that numerous modifications and variations of the described examples and embodiments are possible in light of the above teaching. The disclosed examples and embodiments are presented for purposes of illustration only. Other alternate embodiments may include some or all of the features disclosed herein. Therefore, it is the intent to cover all such modifications and alternate embodiments as may come within the scope of the this invention, which is defined by the appended claims.

### 6. List of reference signs

- 1: power train
- 10: first power sub-system
- 11: fuel cell
- 12: first load
- 12a: first first sub-load
- 12b: second first sub-load
- 13: first bus
- 15: back-up power source
- 16a, 16b: motor controller
- 20: second power sub-system
- 21: secondary power source
- 22: second load
- 22a: first second sub-load
- 22b: second second sub-load
- 23: second bus
- 26a, 26b: motor controller
- 27: source coupling device
- 30: third power sub-system
- 31: second secondary power source
- 32: third load
- 33: third bus
- 36: converter
- 37: source coupling device
- 40: power management system
- **41, 41'**: electrical component
- 42, 42', 42": electrical component
- 50: secondary power source management system
- 60: flight controller
- 61: sensor
- 62: sensor
- 63: sensor
- 64: sensor

## Claims

1. A power train (1), in particular for use in a propulsion system of a vehicle such as an aerial vehicle, comprising:
a first power sub-system (10) comprising:
a first load (12) of the propulsion system;
a fuel cell (11) configured to power the first load (12);
a first bus (13) connecting the fuel cell (11) to the first load (12); and
a second power sub-system (20) comprising:
a second load (22) of the propulsion system;
a secondary power source (21) configured to power the second load (22);
a second bus (23), separate from the first bus (13), connecting the secondary power source (21) to the second load (22);
wherein the fuel cell (11) is configured not to power the first load (12) and the second load (22) simultaneously while the secondary power source (21) powers both the second load (22) and the first load (12); and/or
wherein the secondary power source (21) is configured not to power the second load (22) and the first load (12) simultaneously while the fuel cell (11) powers both the first load (12) and the second load (22).

2. The power train (1) according to claim 1, wherein:
the fuel cell (11) is configured to power the first load (12) directly; and/or
the secondary power source (21) is configured to power the second load (22) directly.

3. The power train (1) according to any one of the preceding claims, wherein:
the fuel cell (11) is further configured to power the second load (22); and/or
the secondary power source (21) is further configured to power the first load (12).

4. The power train (1) according to any one of the preceding claims, further comprising an electrical component (41, 42) configured to exchange power between the first power sub-system and the second power sub-system.

5. The power train (1) according to any one of the preceding claims, wherein:
the first power sub-system (10) comprises one or more converters arranged between the fuel cell (11) and the first load (12); and/or
the second power sub-system (20) comprises one or more converters arranged between the secondary power source (21) and the second load (22).

6. The power train (1) according to claim 4 or 5, further comprising a power management system (40), PMS, for controlling the electrical component (41, 42) and/or the one or more converters,
preferably based on one or more of the following control information:
a total power demand of the propulsion system, a power demand of the first load (12), a power demand of the second load (22), a charging state of the secondary power source (21), a fuel state of the fuel cell (11), a pressure of the fuel cell (11), a temperature of the fuel cell (11), a temperature of the secondary power source (21), a temperature of the electrical component (41, 42), a temperature of one or more converters, a current, in particular a discharge current, a voltage.

7. The power train (1) according to claim 6, further comprising one or more sensors (61, 62, 63, 64) for acquiring at least a portion of the control information.

8. The power train (1) according to claim 6 or 7, wherein the PMS (40) is configured to temporarily disconnect the fuel cell (11) and/or the secondary power source (21) from the first load (12) and/or the second load (22).

9. The power train (1) according to any one of the preceding claims, wherein the first power sub-system (10) and/or the second power sub-system (20) comprises one or more back-up power sources (15).

10. The power train (1) according to any one of the preceding claims, wherein the fuel cell (11) is configured to power and/or recharge the secondary power source (21).

11. The power train (1) according to any one of the preceding claims, further comprising a secondary power source management system (50) for controlling powering and status of the secondary power source (21), in particular for controlling a powering of the secondary power source (21) by the fuel cell (11).

12. The power train (1) according to any one of the preceding claims, wherein:
the first load (12) comprises one or more first engines of a propulsion system of an aerial vehicle, the one or more first engines configured to provide for a first movement, in particular a cruise movement of the aerial vehicle; and/or
the second load (22) comprises one or more second engines of the propulsion system of the aerial vehicle, the one or more second engines configured to provide for a second movement, in particular a hover movement of the aerial vehicle.

13. A vehicle, in particular an aerial vehicle, comprising a power train (1) according to any one of the preceding claims.

## Patentansprüche

1. Ein Antriebsstrang (1), insbesondere zur Verwendung in einem Antriebssystem eines Fahrzeugs wie eines Luftfahrzeugs, umfassend:
ein erstes Leistungsuntersystem (10), umfassend:
eine erste Last (12) des Antriebssystems;
eine Brennstoffzelle (11), die so konfiguriert ist, dass sie die erste Last (12) versorgt;
einen ersten Bus (13), der die Brennstoffzelle (11) mit der ersten Last (12) verbindet;
und
ein zweites Leistungsuntersystem (20), umfassend:
eine zweite Last (22) des Antriebssystems;
eine sekundäre Leistungsquelle (21), die so konfiguriert ist, dass sie die zweite Last (22) versorgt;
einen zweiten Bus (23), getrennt vom ersten Bus (13), der die sekundäre Leistungsquelle (21) mit der zweiten Last (22) verbindet;
wobei die Brennstoffzelle (11) so konfiguriert ist, dass sie die erste Last (12) und die zweite Last (22) nicht gleichzeitig versorgt, während die sekundäre Leistungsquelle (21) sowohl die zweite Last (22) als auch die erste Last (12) versorgt; und/oder
wobei die sekundäre Leistungsquelle (21) so konfiguriert ist, dass sie die zweite Last (22) und die erste Last (12) nicht gleichzeitig versorgt, während die Brennstoffzelle (11) sowohl die erste Last (12) als auch die zweite Last (22) versorgt.

2. Der Antriebsstrang (1) nach Anspruch 1, wobei:
die Brennstoffzelle (11) so konfiguriert ist, dass sie die erste Last (12) direkt versorgt; und/oder
die sekundäre Leistungsquelle (21) so konfiguriert ist, dass sie die zweite Last (22) direkt versorgt.

3. Der Antriebsstrang (1) nach einem der vorstehenden Ansprüche, wobei:
die Brennstoffzelle (11) ferner so konfiguriert ist, dass sie die zweite Last (22) versorgt; und/oder
die sekundäre Leistungsquelle (21) ferner so konfiguriert ist, dass sie die erste Last (12) versorgt.

4. Der Antriebsstrang (1) nach einem der vorstehenden Ansprüche, ferner umfassend eine elektrische Komponente (41, 42), die so konfiguriert ist Leistung zwischen dem ersten Leistungsuntersystem und dem zweiten Leistungsuntersystem auszutauschen.

5. Der Antriebsstrang (1) nach einem der vorstehenden Ansprüche, wobei:
das erste Leistungsuntersystem (10) einen oder mehrere Wandler umfasst, die zwischen der Brennstoffzelle (11) und der ersten Last (12) angeordnet sind; und/oder
das zweite Leistungsuntersystem (20) einen oder mehrere Wandler umfasst, die zwischen der sekundären Leistungsquelle (21) und der zweiten Last (22) angeordnet sind.

6. Der Antriebsstrang (1) nach Anspruch 4 oder 5, ferner umfassend ein Leistungsmanagementsystem (40), PMS, zur Steuerung der elektrischen Komponente (41, 42) und/oder des einen oder der mehreren Wandler,
vorzugsweise basierend auf einer oder mehreren der folgenden Steuerinformationen:
einer Gesamtleistungsanforderung des Antriebssystems, einer Leistungsanforderung der ersten Last (12), einer Leistungsanforderung der zweiten Last (22), einem Ladezustand der sekundären Leistungsquelle (21), einem Kraftstoffzustand der Brennstoffzelle (11), einem Druck der Brennstoffzelle (11), einer Temperatur der Brennstoffzelle (11), einer Temperatur der sekundären Leistungsquelle (21), einer Temperatur der elektrischen Komponente (41, 42), einer Temperatur eines oder mehrerer Wandler, einem Strom, insbesondere einem Entladestrom, einer Spannung.

7. Der Antriebsstrang (1) nach Anspruch 6, ferner umfassend einen oder mehrere Sensoren (61, 62, 63, 64) zum Erfassen mindestens eines Teils der Steuerinformationen.

8. Der Antriebsstrang (1) nach Anspruch 6 oder 7, wobei das PMS (40) so konfiguriert ist, dass es die Brennstoffzelle (11) und/oder die sekundäre Leistungsquelle (21) vorübergehend von der ersten Last (12) und/oder der zweiten Last (22) trennt.

9. Der Antriebsstrang (1) nach einem der vorstehenden Ansprüche, wobei das erste Leistungsuntersystem (10) und/oder das zweite Leistungsuntersystem (20) eine oder mehrere Reserveleistungsquellen (15) umfassen.

10. Der Antriebsstrang (1) nach einem der vorstehenden Ansprüche, wobei die Brennstoffzelle (11) so konfiguriert ist, dass sie die sekundäre Leistungsquelle (21) versorgt und/oder auflädt.

11. Der Antriebsstrang (1) nach einem der vorstehenden Ansprüche, ferner umfassend ein Managementsystem (50) zur Steuerung der Energieversorgung und des Zustands der sekundären Leistungsquelle (21), insbesondere zur Steuerung einer Energieversorgung der sekundären Leistungsquelle (21) durch die Brennstoffzelle (11).

12. Der Antriebsstrang (1) nach einem der vorstehenden Ansprüche, wobei:
die erste Last (12) einen oder mehrere erste Motoren eines Antriebssystems eines Luftfahrzeugs umfasst, wobei der eine oder die mehreren ersten Motoren so konfiguriert sind, dass sie eine erste Bewegung, insbesondere eine Reiseflugbewegung des Luftfahrzeugs, bereitstellen; und/oder
die zweite Last (22) einen oder mehrere zweite Motoren des Antriebssystems des Luftfahrzeugs umfasst, wobei der eine oder die mehreren zweiten Motoren so konfiguriert sind, dass sie eine zweite Bewegung, insbesondere eine Schwebbewegung des Luftfahrzeugs, bereitstellen.

13. Ein Fahrzeug, insbesondere ein Luftfahrzeug, umfassend einen Antriebsstrang (1) nach einem der vorstehenden Ansprüche.

## Revendications

1. Groupe motopropulseur (1), en particulier pour utilisation dans un système de propulsion d'un véhicule tel que un véhicule aérien, comprenant :
un premier sous-système d'alimentation (10) comprenant :
une première charge (12) du système de propulsion ;
une pile à combustible (11) configurée pour alimenter la première charge (12) ;
un premier bus (13) reliant la pile à combustible (11) à la première charge (12) ;
et
un deuxième sous-système d'alimentation (20) comprenant :
une deuxième charge (22) du système de propulsion ;
une source d'énergie secondaire (21) configurée pour alimenter la seconde charge
d'énergie (22) ;
un second bus (23), distinct du premier bus (13), reliant la source d'énergie secondaire (21) à la seconde charge (22) ;
dans lequel la pile à combustible (11) est configurée pour ne pas alimenter simultanément la première charge (12) et la seconde charge (22) alors que la seconde source d'énergie (21) alimente à la fois la seconde charge (22) et la première charge (12) ; et/ou
dans lequel la source d'énergie secondaire (21) est configurée pour ne pas alimenter simultanément la seconde charge (22) et la première charge (12), tandis que la pile à combustible (11) alimente à la fois la première charge (12) et la seconde charge (22).

2. Le groupe motopropulseur (1) selon la revendication 1, dans lequel:
la pile à combustible (11) est configurée pour alimenter directement la première charge (12) ; et/ou
la source d'énergie secondaire (21) est configurée pour alimenter directement la deuxième charge (22).

3. Le groupe motopropulseur (1) selon l'une quelconque des revendications précédentes, dans lequel :
la pile à combustible (11) est en outre configurée pour alimenter la seconde charge (22) ;
et/ou
la source d'énergie secondaire (21) est en outre configurée pour alimenter la première
charge (12).

4. Le groupe motopropulseur (1) selon l'une quelconque des revendications précédentes, comprenant en outre un composant électrique (41, 42) configuré pour échanger de l'énergie entre le premier sous-système d'alimentation et le second sous-système d'alimentation.

5. Le groupe motopropulseur (1) selon l'une quelconque des revendications précédentes, dans lequel :
le premier sous-système d'alimentation (10) comprend un ou plusieurs convertisseurs disposés entre la pile à combustible (11) et la première charge (12) ; et/ou
le deuxième sous-système d'alimentation (20) comprend un ou plusieurs convertisseurs disposés entre la source d'alimentation secondaire (21) et la deuxième charge (22).

6. Le groupe motopropulseur (1) selon la revendication 4 ou 5, comprenant en outre un système de gestion de l'alimentation (40), PMS, pour contrôler le composant électrique (41, 42) et/ou un ou plusieurs convertisseurs,
de préférence sur la base d'une ou plusieurs des informations de contrôle suivantes :
une demande d'alimentation totale du système de propulsion, une demande d'alimentation de la première charge (12), une demande d'alimentation de la deuxième charge (22), un état de charge de la deuxième source d'énergie (21), un état du combustible de la pile à combustible (11), une pression de la pile à combustible (11), une température de la pile à combustible (11), une température de la deuxième source d'énergie (21), une température du composant électrique (41, 42), une température d'un ou de plusieurs convertisseurs, un courant, en particulier un courant de décharge, une tension.

7. Le groupe motopropulseur (1) selon la revendication 6, comprenant en outre un ou plusieurs capteurs (61, 62, 63, 64) pour acquérir au moins une partie de l'information de contrôle.

8. Le groupe motopropulseur (1) selon la revendication 6 ou 7, dans lequel le PMS (40) est configuré pour déconnecter temporairement la pile à combustible (11) et/ou la source d'énergie secondaire (21) de la première charge (12) et/ou de la seconde charge (22).

9. Le groupe motopropulseur (1) selon l'une quelconque des revendications précédentes, dans lequel le premier sous-système d'alimentation (10) et/ou le second sous-système d'alimentation (20) comprend une ou plusieurs sources d'énergie de secours (15).

10. Le groupe motopropulseur (1) selon l'une quelconque des revendications précédentes, dans lequel la pile à combustible (n) est configurée pour alimenter et/ou recharger la source d'énergie secondaire (21).

11. Le groupe motopropulseur (1) selon l'une quelconque des revendications précédentes, comprenant en outre un système de gestion de la source d'énergie secondaire (50) pour contrôler l'alimentation et l'état de la source d'énergie secondaire (21), en particulier pour contrôler l'alimentation de la source d'énergie secondaire (21) par la pile à combustible (11).

12. La chaîne cinématique (1) selon l'une quelconque des revendications précédentes, dans laquelle :
la première charge (12) comprend un ou plusieurs premiers moteurs d'un système de propulsion d'un véhicule aérien, le ou les premiers moteurs étant configurés pour assurer un premier mouvement, en particulier **un** mouvement de croisière du véhicule aérien ;
et/ou
la seconde charge (22) comprend un ou plusieurs seconds moteurs du système de propulsion du véhicule aérien, le ou les seconds moteurs étant configurés pour assurer un second mouvement, en particulier un mouvement de vol stationnaire du véhicule aérien.

13. Un véhicule, en particulier un véhicule aérien, comprenant un groupe motopropulseur (1) selon l'une des revendications précédentes.
